# EUROPEAN PATENT SPECIFICATION

(11) **EP 4 665 972 B1**
(45) Date of publication and mention of the grant of the patent: **02.12.2026**
(21) Application number: 24711547.0
(22) Date of filing: 15.03.2024
(51) Int. Cl.: F03D 13/20, E04H 12/00, F03D 13/10

(54) **METHOD FOR MANUFACTURING A SEGMENTED TUBULAR TOWER, SEGMENTED TUBULAR TOWER AND WIND TURBINE**
VERFAHREN ZUR HERSTELLUNG EINES SEGMENTIERTEN ROHRTURMS, SEGMENTIERTER ROHRTURM UND WINDTURBINE
PROCÉDÉ DE FABRICATION D'UNE TOUR TUBULAIRE SEGMENTÉE, TOUR TUBULAIRE SEGMENTÉE ET ÉOLIENNE

(30) Priority: 13.04.2023 EP 23382341
(43) Date of publication of application: 24.12.2025
(73) Proprietor: Siemens Gamesa Renewable Energy Eolica S.L., 31192 Sarriguren (Navarra) (ES)
(72) Inventor: LOPARDO LÓPEZ, Alejandro, 28005 Madrid (ES); SAEZ ANTHONISEN, Aitor, 48003 Bilbao (ES); UNANUA HERMOSO DE MENDOZA, Pablo, 31699 Olloki (Navarra) (ES)
(74) Representative: SGRE-Association
(86) International application number: PCT/EP2024/056968
(87) International publication number: WO 2024/213342

(56) References cited:
- EP-A1- 3 690 236
- CN-A- 112 879 233
- US-A1- 2018 087 287
- US-A1- 2021 148 335
- US-B2- 8 250 833

## Description

The present invention relates to the field of manufacturing wind turbines, in particular an onshore wind turbine. Furthermore, the invention relates to a method for manufacturing a segmented tubular tower, a segmented tubular tower manufactured according to such a method and a wind turbine comprising such a segmented tubular tower.

During the last few years, wind turbine rotors diameters and the nominal power rate of wind turbines have been increasing. Therefore, wind turbine towers are constantly required to be higher. As the towers are higher, the loads acting at the tower bottom are becoming bigger. Therefore, more resistance capacity is needed.

The resistance of steel wind turbine towers could be increased by thicker walls or larger diameters. Towers with larger diameters are the optimum solution with regards to the final weight of the wind turbine tower. However, wind turbine tower sections size is restricted due to train or road transport conditions. Indeed, wind turbines and onshore wind turbines in particular have to be transported to the installation site. However, transport by rail or road limits the maximum transportable diameter of wind turbine towers. As a result, some known wind turbines are made up of many panels, which are easier to transport. The panels are separately manufactured. Some known towers comprise panels which may be subsequently bent in order to constitute an essentially cylindrical tower. However, panel made towers require an immense amount of screws or fixing means when they are erected on the installation site. In paneled towers, manufacturing control is generally more challenging as parts are manufactured individually and there could be some lack of control regarding positioning of holes, e.g., drilling holes. Documents EP3690236A1 and US825083382 disclose prior art examples of wind turbine tower sections.

Accordingly, it may be desirable to provide an improved method of manufacturing a segmented tubular tower for a wind turbine and a segmented tubular tower, which at least mitigate some of the above disadvantages of conventional segmented tubular towers and methods for manufacturing a segmented tubular tower on side.

According to a first aspect of the invention, the problem is solved by a method for manufacturing a segmented tubular tower section. The method comprises the following steps:
- Providing at least two steel sheets at a manufacturing site,
- drilling at least two pairs of parallel rows of holes along each of at least two vertical division lines of each of the at least two steel sheets, whereas each pair of the two parallel rows of holes is drilled such that each corresponding vertical division line is arranged between the corresponding pair of the two parallel rows of holes,
- cutting the at least two steel sheets along the respective at least two vertical division lines to form at least two vertical segments, and
- connecting the at least two vertical segments with one another to rebuild each of the at least two vertical division lines between the at least two segments at a building site using a plurality of connection means to form the segmented tubular tower section, in particular to form the segmented tubular tower section at least partially forming a segmented tubular tower.

In other words, two steel sheets may be provided, which will subsequently be cut into some vertical segments. Before cutting the cylindrical tower section into segments, pairs of parallel rows of holes may be drilled along an imaginary cutting line, i. e., the vertical division lines. Therefore, each of the at least two steel sheets comprise at least two vertical division lines. It is noted, that the at least two steel sheets may be flat or rolled. The provided at least two steel sheets may be flat before the said holes are drilled and rolled afterwards. Alternatively, the at least two sheets may be first rolled and welded together before said holes are drilled. In particular, numerous steel sheets, preferably 6 to 15 steel sheets, may be provided. The steel sheets of the provided tubular tower section may be configured to be rolled to form a tubular, i.e. a cylinder.

In other words, as a first option, the at least two steel sheets may be rolled after the at least two pairs of parallel rows of holes have been drilled. The rolled and drilled sheets may subsequently be welded together to form a tubular tower section which will thereafter be cut. As an alternative option, the two steel sheets may first be rolled and welded together before the at least two pairs of parallel rows of holes are drilled.

When cutting the two steel sheets, the two steel sheets are preferably already welded with each other and form an unsegmented tubular tower section. Hence, the division lines of the first steel sheet inevitably correspond, i.e. are aligned, with the division lines of the second steel sheet.

It is noted that drilling at least two pairs of parallel rows of holes along each of at least two vertical division lines may be executed at the manufacturing site. Also, the step of cutting the at least two steel sheets along each respective at least two vertical division lines may be executed at the manufacturing site.

In the context of the present disclosure, the wind turbine may be an onshore wind turbine.

What is significant here is that the at least two steel sheets, i.e. the unsegmented tubular tower section may be cut along the at least two vertical division lines to form at least three vertical segments after the tubular tower section or roll steel sheets forming the tubular tower section have been drilled. This allows a very precise drilling of the at least two pairs of parallel rows of holes.

The vertical segments may then be transported from the manufacturing site to the building site. The building site may also be designated as the construction site. The building site may in general designate the onshore position aimed for the wind turbine.

At the building site, the at least two vertical segments will be connected with one another using connection means. A connection means may be installed at a pair of holes of a pair of parallel rows of holes, whereas each hole of said pair is at each one of two adjacent vertical segments. Advantageously, none of the plurality of connection means comprise a flange. The absence of flanges may render the method for manufacturing a segmented tubular tower cost and time effective.

The method can therefore advantageously be used to produce a segmented tubular tower section comprising a plurality of vertical segments connected by connecting means at each vertical joint. Via said method, the step of connecting the at least two vertical segments with one another is drastically simplified.

Furthermore, said method may advantageously allow manufacturing a segmented tubular tower section with a large diameter that is with a diameter of 3 m or more, in particular 4 m or more.

Therefore, a cost effective, time effective, reliable and precise method for manufacturing a segmented tubular tower section for a wind turbine is provided.

According to an embodiment of the method, after cutting the at least two steel sheets, in particular after cutting the unsegmented tubular tower section, the at least two vertical segments are transported from the manufacturing site to the building site. In particular, the at least two vertical segments are transported via train, via ship and/or via road transportation from the manufacturing site to the building site.

According to an embodiment of the method, the provided at least two steel sheets each have a length of 10 m to 30 m, in particular 12 m to 20 m.

According to an embodiment of the method, the manufactured segmented tubular tower section has a diameter of 4 m or more, in particular an average diameter of 4 m or more, in particular an average diameter of 5 m or more. The rolled steel sheets and/or the formed segmented tubular tower section may have a variable diameter in height, wherein the diameter may be decreasing with height.

According to an embodiment of the method, the method further comprises at least one of the following steps:
- rolling the at least two steel sheets, and
- welding the at least two rolled steel sheets together to obtain a tubular tower section, in particular an unsegmented tubular tower section. In other words, rolled steel plates may be provided to create cylindrical shells.

The step of rolling steel sheets and/or the step of welding the rolled steel sheets together may be carried out after or prior to drilling the at least two pairs of parallel rows of holes. The steel sheets may be welded to be connected with each other at their flanges.

According to an embodiment of the method, the manufactured tubular tower section is between 3 m to 40 m high, in particular between 15 to 30 m high. Hence, in particular, the formed segmented tubular tower section is between 3 m to 40 m high, in particular between 15 to 30 m high.

According to an embodiment of the method, the step of connecting the at least two vertical segments using a plurality of connection means comprises the following step:
- Positioning at least one/the connection plate inside and/or outside of the at least two steel sheets, to cover each of the rebuilt at least two vertical division lines,
whereas the at least one connection plate comprises at least one pair of holes, and whereas the at least one connection plate is positioned such that the at least one pair of holes of the at least one connection plate is aligned with a pair of holes of the corresponding at least two pairs of parallel rows of holes of the at least one tubular tower section, in particular of the at least two steel sheets.

It is noted that connection plate(s) may vary in width. For example, a connection plate being placed within the segmented tubular tower section may be connected to a connection plate being placed outside the segmented tubular tower section, whereas both connection plates have different width.

According to an embodiment of the method, the at least one connection plate extends vertically over the at least two steel sheets, in particular over each of the steel sheets forming the tubular tower section, in particular forming the segmented tubular tower section.

For each provided steel sheet, the steps of drilling, cutting and connecting may be executed.

According to an embodiment of the method, it further comprises at least one of the following steps:
- Drilling at least one slotted hole along each of the at least two vertical division lines of the at least two steel sheets, and
- while connecting the at least two vertical segments with one another at the building site, positioning the at least two vertical segments using a positioning means in combination with the at least one slotted hole.

According to a second aspect of the present disclosure, a segmented tubular tower section manufactured as described hereinabove and hereinafter is provided. The segmented tubular tower section comprises
at least two steel sheets, and
a plurality of connection means,
whereas each of the at least two steel sheets, in particular the segmented tubular tower section, comprises three to seven segments, in particular three to five segments, connected to each other. The segmented tubular tower section generally corresponds to the provided tubular tower section that has at least been drilled and cut into segments.

According to an embodiment of the segmented tubular tower section, it further comprises at least one connection plate, in particular at least one connection plate for each of the at least two vertical division lines of the at least two steel sheets, in particular of the at least one (segmented) tubular tower section.

According to an embodiment of the segmented tubular tower section, the at least one connection plate is bended, flat or mechanized.

According to an embodiment of the segmented tubular tower section, the plurality of connection means each comprises at least two fasteners, wherein for each of the at least one tubular tower section, the plurality of connection means comprises less than two thousands fasteners, in particular less than five hundred fasteners.

According to an embodiment of the segmented tubular tower section, the two fasteners each comprise a hexagon bolt, a press nut, a welded bushing or a threaded hole.

According to an embodiment of the segmented tubular tower section, it further comprises a positioning means, whereas the positioning means comprises a positioning pin, which is configured to be inserted in a slotted hole of a vertical segment to align the at least two vertical segments with each other.

According to a second aspect of the present disclosure a wind turbine, in particular an onshore wind turbine, is provided. The wind turbine comprises a segmented tubular tower section as described hereinabove and hereinbelow or comprises a segmented tubular tower section manufactured according to a method as described hereinabove and hereinbelow.

The aforementioned and other features and advantages of the invention will become further apparent from the following detailed description read in conjunction with the accompanying drawings. In the drawings, like reference numerals refer to like elements.
Fig. 1 shows a steel sheet of a tubular tower section according to an exemplary embodiment,
Fig. 2 shows a segmented tubular tower section according to an exemplary embodiment,
Fig. 3a to 3d show connection means according to exemplary embodiments,
Fig. 4a and 4b show connection means according to further exemplary embodiments,
Fig. 5a to 7 show positioning means according to exemplary embodiments,
Fig. 8 schematically shows a method for manufacturing a segmented tubular tower section according to an exemplary embodiment, and
Fig. 9 shows a wind turbine according to an exemplary embodiment.

The figures are for illustrative purposes only and are not true to scale. In principle, identical or like parts, elements and/or steps are provided with identical or similar reference numbers in the figures.

While specific embodiments are disclosed hereinafter, various changes and modifications can be made without departing from the scope of the invention.

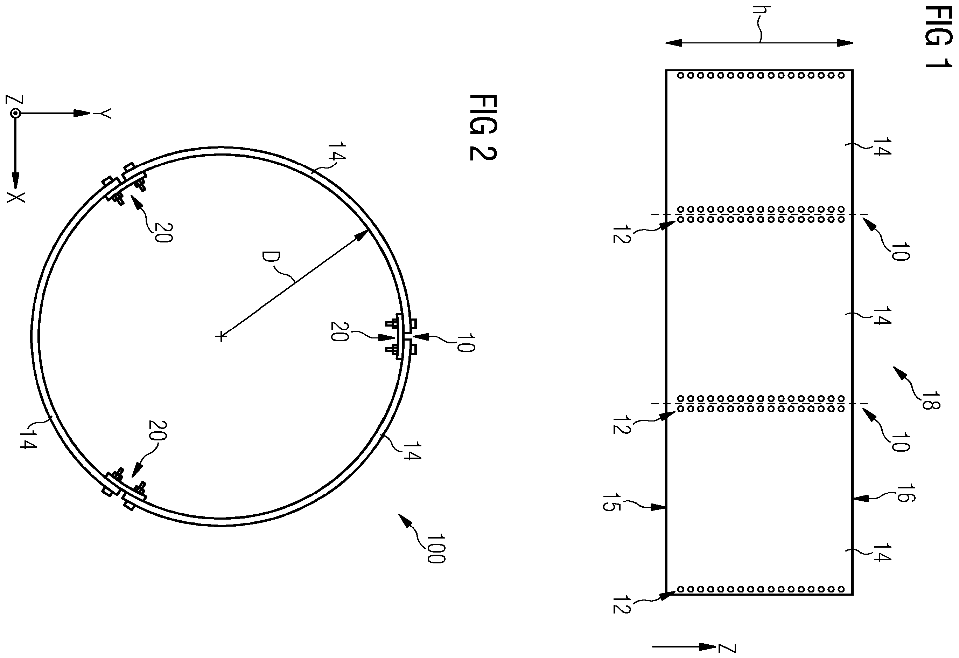

Fig. 1 shows a steel sheet 18 for a segmented tubular tower section 100 according to an exemplary embodiment. In particular, fig. 1 shows a flat steel sheet 18. The flat steel sheet 18 has first been drilled prior to rolling. Three pairs of parallel rows of holes 12 have been drilled along three different vertical division lines 10 of the steel sheet 18. Each pair of the parallel rows of holes 12 is drilled such that corresponding vertical division line is arranged between the corresponding pair of the parallel rows, in particular equidistantly from each respective hole of a pair of holes along the parallel rows of holes. That is, one of the two parallel rows of holes 12 may be arranged on a first side of the at least one vertical division line 10 and the second of the two parallel rows of holes 12 may be arranged on a second side opposed to the first side of the at least one vertical division line 10. At this stage of the manufacturing method, the vertical division lines 10 are merely imaginary as the steel sheet 18 has not yet been cut. After drilling the pairs of parallel rows of holes 12, the steel sheet 18, i.e. the flat steel sheet, will preferably be rolled and welded with further flat steel sheets (the further flat steel sheets having also been drilled and rolled). The drilled, rolled and welded steel sheets may hence form a cylinder, i.e. an unsegmented tubular tower section. The drilled unsegmented tubular tower section will thereafter be cut along each of the three vertical division lines 10 of each of the steel sheets to form the three vertical segments 14 shown in fig. 1.

The steel sheet 18 of fig. 1 has a height h from bottom section flange 15 to top section flange 16 of between 2 m and 30 m or between 6 m and 15 m. The steel sheets of the tubular tower section may have a width of between 1,5 m to 3 m. It is noted that the tubular tower section made of at least two steel sheets 18 may be cut along each of the vertical division lines 10 equidistantly such as to form vertical segments 14 of the same dimensions.

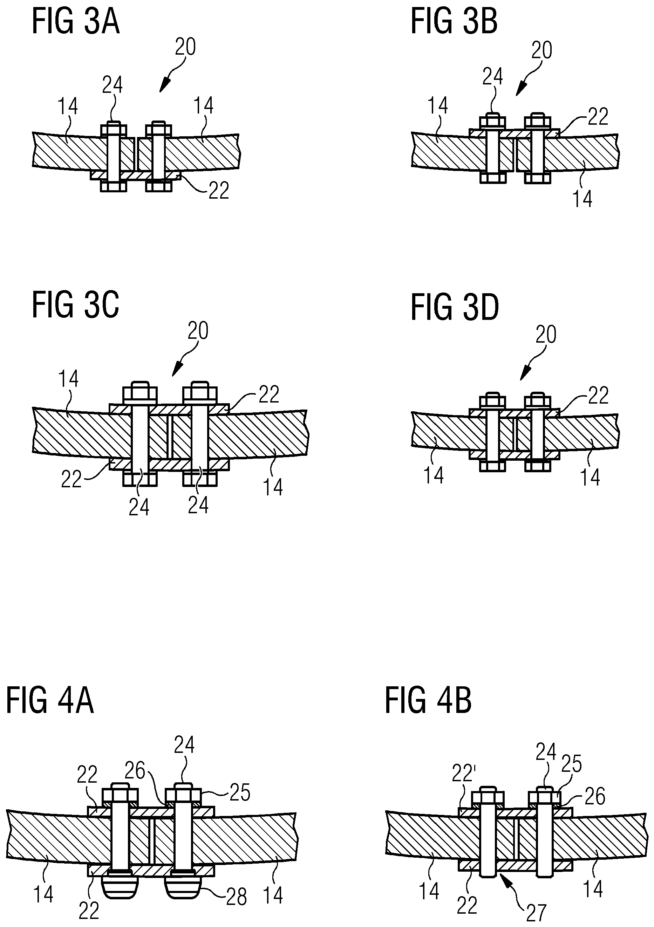

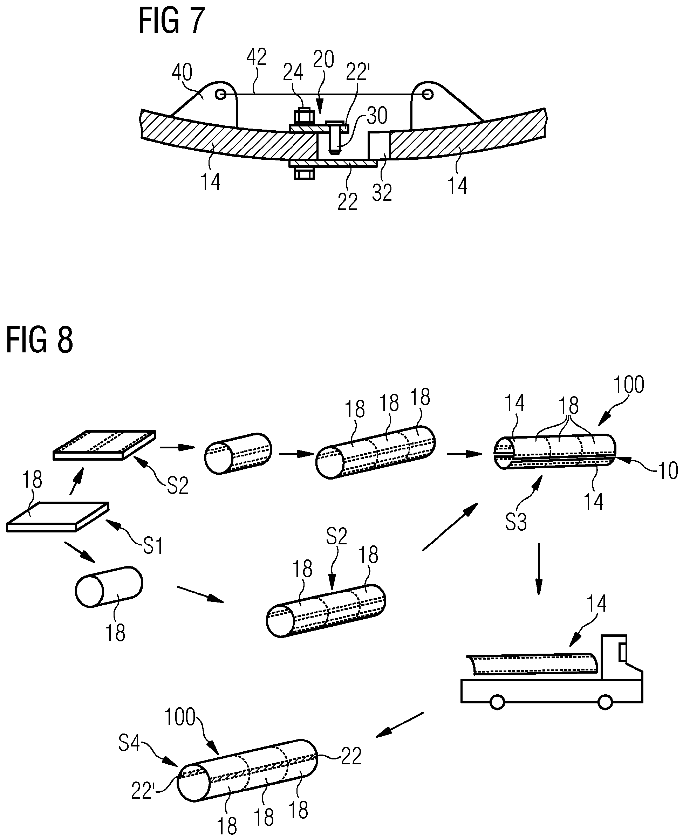

Fig. 2 shows a segmented tubular tower section 100 according to an exemplary embodiment. The segmented tubular section 100 of fig. 2 may have a diameter D of 4,5 m for example. When referring to a vertical direction, the z-direction according to the coordinate system shown in fig. 2 is meant. The vertical segments 14 of the segmented tubular tower section 100 of fig. 2 may correspond to the vertical segments 14 from the tubular tower section of fig. 1. The vertical segments 14 in fig. 2 have already been connected with one another to rebuild the three vertical division lines 10. The step of connecting the vertical segments 14 may be executed at the building site. To connect the vertical segments, connection means 20 are provided for each vertical division line 10. The connection means 20 will be described in more detail with reference to figures 3a to 4. In order to connect the vertical segments 14 of the segmented tubular tower section 100, it may be preferred to avoid flanges. This allows dispensing any welding step while manufacturing a segmented tubular tower 50 (cf. fig. 8).

It is noted that the vertical segments 14 of the segmented tubular tower section 100 are preferably connected with one another such as to form a waterproof connection between the vertical segments 14.

Fig. 3a to 3d show connection means 20 according to exemplary embodiments. A connection means 20 may generally comprise two fasteners 24, such as bolts, one for each hole of a pair of holes of a pair of parallel rows of holes 12. The two holes of said pair of holes are advantageously positioned equidistantly from the corresponding vertical division line 10. The segmented tubular tower 50, which comprises at least one segmented tubular tower section 100, may further comprise one or more connection plates 22, in particular one or more connection plates 22 for each vertical division line 10. It is noted that only one connection plate 22 for each vertical division line 10 may be provided. That is, a connection plate may extend from the bottom section flange 15 of the segmented tubular tower section 100 to the top section flange 16 of the segmented tubular tower section 100. Alternatively, numerous connection plates 22 may be provided for each vertical division line 10. That is, discontinuous connection plates 22 may be placed to cover the respective division line along the segmented tubular tower section height h. Hence, at least one connection plate 22 may be coupled to one or more connection means 20. For example, one connection plate 22 may be provided for two, four, five or ten connection means 20.

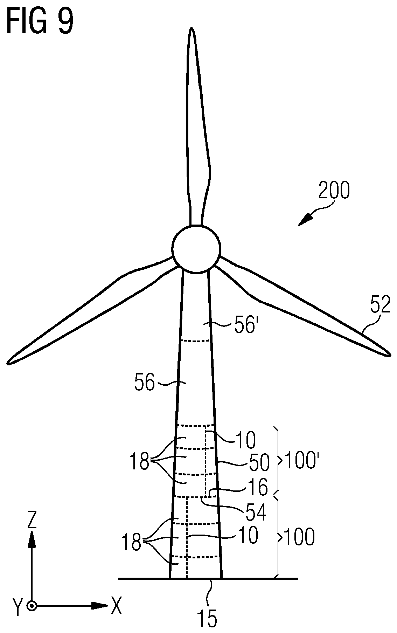

It can be distinguished between an inner connection plate 22 being placed inside the cylinder formed by the segmented tubular tower section 100 (cf. fig. 3b) and an outer connection plate 22 being placed on the outside of the segmented tubular tower section 100 (cf. fig. 3a). Alternatively, the segmented tubular tower section 100 may comprise both inner connection plates 22 and an outer connection plate 22 (cf. fig. 3c and 3d). As shown for example in fig. 8 or 9, a connection plate 22 may extend over several steel sheets 18 welded together.

A connection plate 22 may be flat. In this case, a gap may exist between plate and the two vertical segments 14 of the segmented tubular tower section 100. Alternatively, a connection plate 22 may be bent. A bent connection plate 22 may be rolled with the same curvature as the tubular tower section or with a curvature close to the curvature of the tower section (e.g. in case of a conical section). As a third option, a connection plate 22 may be a mechanized plate, that is, a plate with one face mechanized according to the curvature of the tubular tower section. For instance, a connection plate 22 placed inside the segmented tubular tower 50 or the segmented tubular tower section 100 may be bent, and a connection plate 22 placed outside the segmented tubular tower 50 or the segmented tubular tower section 100 may be flat.

As illustrated in fig. 3a to 4b each connection plate 22 comprises at least a pair of holes or a pair of parallel rows of holes. The fasteners 24, here bolts, of the connection means 20 may hence be inserted in both the holes of the corresponding adjacent segments and in the holes of the connection plates 22. A connection means 20 may further comprise at least one pair of washers 26. The connection means 20 may comprise bolts combined with nuts 25 and washers 26. Alternatively, or in addition, the connection means 20 may comprise studs with press-nut 28 combined with nuts 25 and a washer 26. Alternatively, or in addition, studs with welded threaded bushings combined with nuts and a washer may be provided. As a further alternative, threaded holes 27 in the outer connection plate 22 may be provided (cf. fig. 4b). In general, the plurality of connection means may be configured such as to ensure a waterproof connection between the corresponding vertical segments 14.

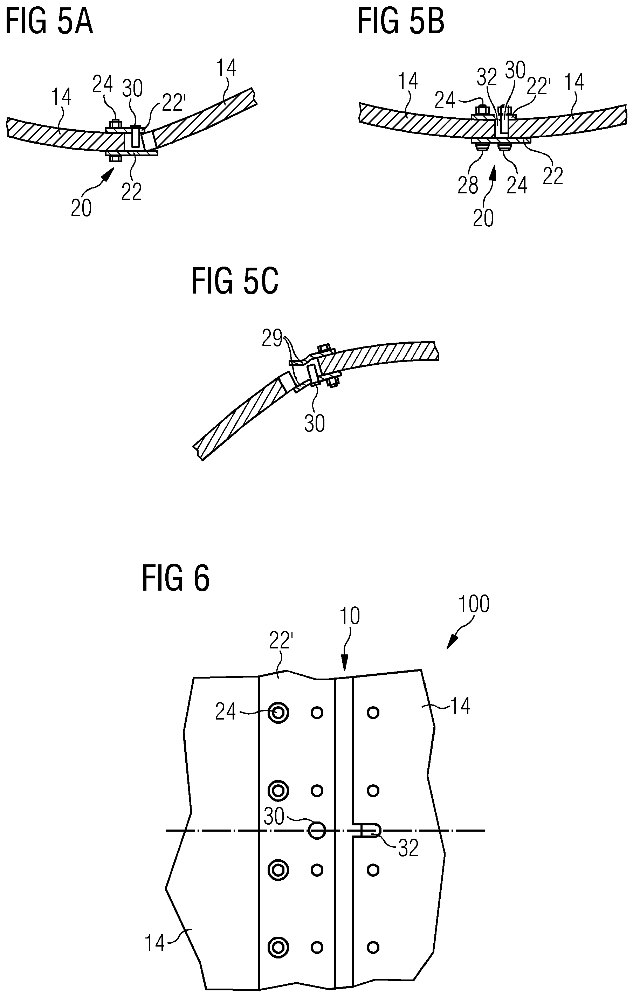

Fig. 5a to 7 show positioning means according to exemplary embodiments. While connecting the at least two vertical segments 14 with one another at the building site, the vertical segments 14 may be positioned using a positioning means 30 in combination with a slotted hole 32. Therefore, it may be provided to drill at least one slotted hole 32 along each of the at least two vertical division lines of the segmented tubular tower section 100 (cf. fig. 6). The positioning means 30 may comprise a positioning pin or a guiding pin. It is noted that the positioning means 30 may be combined with a connection means 20. Therefore, the connection means 20 being combined with the positioning means 30 may comprise only one fastener 24, e.g. bolt. Two connection plates 22, 22' may be provided at the vertical division line 10 comprising a slotted hole 32, whereas one of the two connection plates 22, 22', preferably an inner connection plate 22', is shorter in width than the other one. A connection plate 22 being placed at a vertical division line 10 comprising one or more slotted hole 32 may have a divergent edge (cf. fig. 5c). This may allow connecting and/or positioning the two adjacent vertical segments 14 with and/or to one another.

When connecting two vertical segments 14 with one another using a positioning means 30, one may proceed as followed. First, a connection means 20 with two connection plates 22, an outer connection plate 22 and an inner connection plate 22' being shorter in width than the inner connection plate, may be connected or fixed to a first vertical segment 14. Then, the positioning means 30, i.e.**,** a positioning pin may be placed in the free hole of the inner connection plate 22'. The second vertical segment 14 may be moved closed to the first vertical segment 14 already connected to the connection means. Alignment of the second vertical segment 14 may be helped by the inner connection plate 22' and the outer connection plate 22 and the positioning pin, also called guiding pin. The second vertical segment 14 may be pushed to the first vertical segment 14 until contact with the guiding pin is made. It is noted that the slotted hole may not necessarily extend over the entire thickness of the corresponding vertical segment 14. If the slotted hole is less deep than the thickness of the corresponding vertical segment 14, the second vertical segment 14 may subsequently be fixed or connected to the outer connection plate 22 using a bolt as fastener 24 of the connection means 20 (cf. fig. 5b).

Optionally, several lugs 40 along the vertical tower segments may be welded to assemble on them a closing system to bring together vertical segments 14 during the step of connecting the vertical segments 14 (cf. fig. 7). A pair of welded lugs 40 may be connected with one another with an adjustable means 42 like a chain, a rope or a bar for example.

In summary, a preferred configuration may comprise discontinuous connection plates 22, which enable different shell thickness along the z-direction of the segmented tubular tower section. Connection plates 22 may be located both inside and outside the segmented tubular tower section 100, which allow providing higher fatigue resistance and higher friction force. Additionally, press nuts could be assembled in the outer connection plate 22 instead of assembling them to the tower wall, that is, directly at the vertical segment 14, which would require more complex tools. Providing press nuts only on the outside of the segmented tubular tower section 100 enables installation and maintenance from inside the segmented tubular tower section 100. A preferred configuration may also include guiding features as explained above (positioning pins and plates with different widths or divergent edge[s]). This allows a time effective connecting step of the manufacturing method.

Fig. 8 schematically shows a method for manufacturing a segmented tubular tower section 100 according to an exemplary embodiment. In a first method step S1 two steel sheets 18 will be provided at a manufacturing site, whereas one steel sheet 18 at the time may be provided. As a second method step S2, the provided steel sheet 18 will be drilled. The second method step S2 may be carried out subsequently a posteriori to the first method step S1 (cf. the upper flow chart line). In this case, at least two pairs of parallel rows of holes 12 along each of at least two vertical division lines of each of the at least two steel sheets 18 will be drilled. Afterwards, the drilled steel sheet 18 will be rolled. Those steps will be carried out for each provided steel sheet 18. After drilling and rolling each steel sheet 18, the steel sheets will be welded together 18 (in fig. 8 three steel sheets are welded together).

Alternatively, prior to drilling said holes, the provided steel sheet will be rolled and welded with the other steel sheet, in particular with further steel sheets 18 (cf. the lower flow chart line).

In both cases (i.e. the upper or the lower flow chart line), an unsegmented tubular tower section 100 may be formed by the at least two drilled (rolled and welded) sheets 18. In a third method step S3, the unsegmented tubular tower 100 section or the at least two steel sheets 18, here the three steel sheets 18, are cut along the respective at least two vertical division lines to form at least two, preferably three, vertical segments 14. Hence, the division lines 10 of the steel sheets 18 are evidently all aligned with the division lines 10 of the further steel sheets 18. In a fourth method step S4, the at least two vertical segments 14 are connected with one another to rebuild each of the at least two vertical division lines 10 between the at least two vertical segments 14 at a building site using a plurality of connection means 20 to form the segmented tubular tower section 100. Therefore, each of the vertical segments 14 may be transported, preferably separately, from the manufacturing site to the building site.

In a further method step (not shown in fig. 8), the segmented tubular tower section 100 may be erected such as to be vertically positioned on a platform for example. Further tubular tower sections, such as further segmented tubular tower sections 100 and/or unsegmented tubular tower section(s) 56, 56' may also be positioned vertically. The wind turbine tower may hence be erected by positioning all the tubular tower sections vertically above another. Preferably, the segmented tubular tower section is positioned at the bottom part of the wind turbine tower 50. In other words, the method may further comprise the step of erecting the wind turbine tower 50 comprising at least one segmented tubular tower section 100.

Fig. 9 shows a wind turbine 200 according to an exemplary embodiment. The wind turbine 200 is in particular an onshore wind turbine. The latter comprises blades 52 and a segmented tubular tower 50, which comprises two segmented tubular tower sections 100, 100', e.g., segmented tubular tower sections such as described with reference to the previous figures. Each segmented tubular tower section 100, 100' comprises four steel sheets 18. In general, a segmented tubular tower section 100 may comprise six to twelve steel sheets 18. The division lines 10 of each steel sheet 18 are hence vertically aligned. The segmented tubular tower 50 may further comprise two unsegmented tubular tower sections 56. The segmented tubular tower sections 100, 100' generally form or constitute the bottom part(s) of the segmented tubular tower 50, as the bottom part(s) of said tower 50 is generally larger, i.e.**,** have/has a larger diameter than the top part(s). The top section flange 16 of the first segmented tubular tower section 100 and in particular of the top steel sheet 18 of said segmented tubular tower section 100 may correspond to the bottom section flange 15 of the second segmented tubular tower section 100' and in particular to the bottom steel sheet 18 of said segmented tubular tower section 100', whereas a separation line 54 delimits the first from the second segmented tubular tower sections 100, 100'.

The two segmented tubular tower sections 100, 100' may be positioned over one another, such that at least one of their vertical division lines 10 is not aligned.

In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to an advantage. Any reference signs in the claims should not be construed as limiting the scope.

## Claims

1. Method for manufacturing a segmented tubular tower section (100) for a wind turbine (200) comprising the following steps:
(S1) Providing at least two steel sheets (18) at a manufacturing site,
(S2) drilling at least two pairs of parallel rows of holes (12) along each of at least two vertical division lines (10) of each of the at least two steel sheets (18),
whereas each pair of the two parallel rows of holes (12) is drilled such that each corresponding vertical division line (10) is arranged between the corresponding pair of the two parallel rows of holes (12),
(S3) cutting the at least two steel sheets (18) along the respective at least two vertical division lines (10) to form at least two vertical segments (14), and
(S4) connecting the at least two vertical segments (14) with one another to rebuild each of the at least two vertical division lines (10) between the at least two vertical segments (14) at a building site using a plurality of connection means (20) to form the segmented tubular tower section (100).

2. Method according to claim 1,
wherein after cutting the at least two steel sheets (18), the at least two vertical segments (14) are transported from the manufacturing site to the building site.

3. Method according to any one of claims 1 and 2,
**characterized in that**,
the provided at least two steel sheets (18) each have a length of 10 m to 30 m, in particular 12 m to 20 m**.**

4. Method according to any one of the preceding claims,
**characterized in that**, the manufactured segmented tubular tower section (100) has a diameter of 4 m or more, in particular an average diameter of 4 m or more, in particular an average diameter of 5 m or more.

5. Method according to any one of the preceding claims,
**characterized in that**,
the method further comprises at least one of the following steps:
Rolling the at least two steel sheets, and
welding the at least two rolled steel sheets together to obtain a tubular tower section.

6. Method according to any one of the preceding claims,
**characterized in that**,
the tubular tower section is between 3 m to 40 m high, in particular between 20 to 30 m high.

7. Method according to any one of the preceding claims,
**characterized in that**,
the step of connecting the at least two vertical segments (14) using a plurality of connection means (20) comprises the following step:
Positioning at least one/the connection plates (22) inside and/or outside of the at least two steel sheets, to cover each of the rebuilt at least two vertical division lines (10),
whereas the at least one connection plate (22) comprises at least one pair of holes, and whereas the at least one connection plate is positioned such that the at least one pair of holes of the at least one connection plate is aligned with a pair of holes of the corresponding at least two pairs of parallel rows of holes (12) of the at least two steel sheets (18).

8. Method according to claim 7,
**characterized in that**,
the at least one connection plate (22) extends vertically over the at least two steel sheets, in particular over each of the steel sheets forming the tubular tower section (100).

9. Method according to any one of the preceding claims,
**characterized in that**,
it further comprises at least one of the following steps:
Drilling at least one slotted hole (32) along each of the at least two vertical division lines (10) of the at least two steel sheets (18), and
while connecting the at least two vertical segments (14) with one another at the building site, positioning the at least two vertical segments (14) using a positioning means (30) in combination with the at least one slotted hole (32).

10. Segmented tubular tower section (100) manufactured according to a method according to any one of the claims 1 to 9, comprising
at least two steel sheets (18), and
a plurality of connection means (20),
whereas each of the at least two steel sheets (18) comprises three to seven vertical segments (14), in particular three to five vertical segments (14), connected to each other.

11. Segmented tubular tower section (100) according to claim 10,
**characterized in that**,
it further comprises at least one connection plate (22), in particular at least one connection plate (22) for each of the at least two vertical division lines (10) of the at least two steel sheets (18).

12. Segmented tubular tower section (100) according to claim 11,
**characterized in that**,
the at least one connection plate (22) is bended, flat or mechanized.

13. Segmented tubular tower section (100) according to any one of the claims 10 to 12,
**characterized in that**,
the plurality of connection means (20) each comprises at least two fasteners (24), and wherein for each of the at least one segmented tubular tower sections (100), the plurality of connection means comprises less than two thousand fasteners (24), in particular less than five hundred fasteners (24).

14. Segmented tubular tower section (100) according to claim 13,
**characterized in that**,
the two fasteners (24) each comprises a hexagon bolt, a press nut, a welded bushing or a threaded hole.

15. Segmented tubular tower section (100) according to any one of the claims 10 to 14,
**characterized in that**,
it further comprises a positioning means (30), whereas the positioning means (30) comprises a positioning pin, which is configured to be inserted in a slotted hole (32) of a vertical segment (14) to align the at least two vertical segments (14) with each other.

16. Wind turbine, comprising at least one segmented tubular tower section (100) according to any one of the claims 10 to 15 or comprising a segmented tubular tower section (100) manufactured according to a method according to any one of the claims 1 to 9.

## Patentansprüche

1. Verfahren zum Produzieren eines segmentierten röhrenförmigen Turmabschnitts (100) für eine Windturbine (200), umfassend die folgenden Schritte:
(S1) Bereitstellen von mindestens zwei Stahlblechen (18) an einer Produktionsstelle,
(S2) Bohren von mindestens zwei Paaren von parallelen Reihen von Löchern (12) entlang jeder von mindestens zwei vertikalen Trennlinien (10) jedes der mindestens zwei Stahlbleche (18), wobei jedes Paar der zwei parallelen Reihen von Löchern (12) derart gebohrt wird, dass jede entsprechende vertikale Trennlinie (10) zwischen dem entsprechenden Paar der zwei parallelen Reihen von Löchern (12) angeordnet ist,
(S3) Schneiden der mindestens zwei Stahlbleche (18) entlang der jeweiligen mindestens zwei vertikalen Trennlinien (10), um mindestens zwei vertikale Segmente (14) zu bilden, und
(S4) Verbinden der mindestens zwei vertikalen Segmente (14) miteinander, um jede der mindestens zwei vertikalen Trennlinien (10) zwischen den mindestens zwei vertikalen Segmenten (14) auf einer Baustelle unter Verwendung einer Vielzahl von Verbindungsmitteln (20) wiederaufzubauen, um den segmentierten röhrenförmigen Turmabschnitt (100) zu bilden.

2. Verfahren nach Anspruch 1,
wobei nach dem Schneiden der mindestens zwei Stahlbleche (18) die mindestens zwei vertikalen Segmente (14) von der Produktionsstelle zu der Baustelle transportiert werden.

3. Verfahren nach einem der Ansprüche 1 und 2,
**dadurch gekennzeichnet, dass**
die bereitgestellten mindestens zwei Stahlbleche (18) jeweils eine Länge von 10 m bis 30 m, insbesondere 12 m bis 20 m, aufweisen.

4. Verfahren nach einem der vorhergehenden Ansprüche,
**dadurch gekennzeichnet, dass** der produzierte segmentierte röhrenförmige Turmabschnitt (100) einen Durchmesser von 4 m oder mehr, insbesondere einen durchschnittlichen Durchmesser von 4 m oder mehr, insbesondere einen durchschnittlichen Durchmesser von 5 m oder mehr, aufweist.

5. Verfahren nach einem der vorhergehenden Ansprüche,
**dadurch gekennzeichnet, dass**
das Verfahren ferner mindestens einen der folgenden Schritte umfasst:
Walzen der mindestens zwei Stahlbleche und Zusammenschweißen der mindestens zwei gewalzten Stahlbleche, um einen röhrenförmigen Turmabschnitt zu erhalten.

6. Verfahren nach einem der vorhergehenden Ansprüche,
**dadurch gekennzeichnet, dass**
der röhrenförmige Turmabschnitt zwischen 3 m und 40 m hoch, insbesondere zwischen 20 und 30 m hoch, ist.

7. Verfahren nach einem der vorhergehenden Ansprüche,
**dadurch gekennzeichnet, dass**
der Schritt von Verbinden der mindestens zwei vertikalen Segmente (14) unter Verwendung einer Vielzahl von Verbindungsmitteln (20) den folgenden Schritt umfasst:
Positionieren mindestens einer/der Verbindungsplatten (22) innerhalb und/oder außerhalb der mindestens zwei Stahlbleche, um jede der wiederaufgebauten mindestens zwei vertikalen Trennlinien (10) abzudecken, wobei die mindestens eine Verbindungsplatte (22) mindestens ein Paar von Löchern umfasst und wobei die mindestens eine Verbindungsplatte derart positioniert ist, dass das mindestens eine Paar von Löchern der mindestens einen Verbindungsplatte an einem Paar von Löchern der entsprechenden mindestens zwei Paare von parallelen Reihen von Löchern (12) der mindestens zwei Stahlbleche (18) ausgerichtet ist.

8. Verfahren nach Anspruch 7,
**dadurch gekennzeichnet, dass**
sich die mindestens eine Verbindungsplatte (22) vertikal über die mindestens zwei Stahlbleche, insbesondere über jedes der Stahlbleche, die den röhrenförmigen Turmabschnitt (100) bilden, erstreckt.

9. Verfahren nach einem der vorhergehenden Ansprüche,
**dadurch gekennzeichnet, dass**
es ferner mindestens einen der folgenden Schritte umfasst:
Bohren mindestens eines Langlochs (32) entlang jeder der mindestens zwei vertikalen Trennlinien (10) der mindestens zwei Stahlbleche (18) und,
während die mindestens zwei vertikalen Segmente (14) auf der Baustelle miteinander verbunden werden, Positionieren der mindestens zwei vertikalen Segmente (14) unter Verwendung eines Positioniermittels (30) in Kombination mit dem mindestens einen Langloch (32).

10. Segmentierter röhrenförmiger Turmabschnitt (100), der gemäß einem Verfahren nach einem der Ansprüche 1 bis 9 produziert wird, umfassend
mindestens zwei Stahlbleche (18) und
eine Vielzahl von Verbindungsmitteln (20),
wobei jedes der mindestens zwei Stahlbleche (18) drei bis sieben vertikale Segmente (14), insbesondere drei bis fünf vertikale Segmente (14), umfasst, die miteinander verbunden sind.

11. Segmentierter röhrenförmiger Turmabschnitt (100) nach Anspruch 10,
**dadurch gekennzeichnet, dass**
er ferner mindestens eine Verbindungsplatte (22), insbesondere mindestens eine Verbindungsplatte (22) für jede der mindestens zwei vertikalen Trennlinien (10) der mindestens zwei Stahlbleche (18), umfasst.

12. Segmentierter röhrenförmiger Turmabschnitt (100) nach Anspruch 11,
**dadurch gekennzeichnet, dass**
die mindestens eine Verbindungsplatte (22) gebogen, flach oder mechanisiert ist.

13. Segmentierter röhrenförmiger Turmabschnitt (100) nach einem der Ansprüche 10 bis 12,
**dadurch gekennzeichnet, dass**
die Vielzahl von Verbindungsmitteln (20) jeweils mindestens zwei Befestigungselemente (24) umfasst, und wobei für jeden der mindestens einen segmentierten röhrenförmigen Turmabschnitte (100) die Vielzahl von Verbindungsmitteln weniger als zweitausend Befestigungselemente (24), insbesondere weniger als fünfhundert Befestigungselemente (24), umfasst.

14. Segmentierter röhrenförmiger Turmabschnitt (100) nach Anspruch 13,
**dadurch gekennzeichnet, dass**
die zwei Befestigungselemente (24) jeweils eine Sechskantschraube, eine Pressmutter, eine geschweißte Buchse oder ein Gewindeloch umfassen.

15. Segmentierter röhrenförmiger Turmabschnitt (100) nach einem der Ansprüche 10 bis 14,
**dadurch gekennzeichnet, dass**
er ferner ein Positioniermittel (30) umfasst, wobei das Positioniermittel (30) einen Positionierstift umfasst, der dazu konfiguriert ist, in ein Langloch (32) eines vertikalen Segments (14) eingeführt zu werden, um die mindestens zwei vertikalen Segmente (14) aneinander auszurichten.

16. Windturbine, umfassend mindestens einen segmentierten röhrenförmigen Turmabschnitt (100) nach einem der Ansprüche 10 bis 15 oder umfassend einen segmentierten röhrenförmigen Turmabschnitt (100), der gemäß einem Verfahren nach einem der Ansprüche 1 bis 9 produziert ist.

## Revendications

1. Procédé de fabrication d'une section de tour tubulaire segmentée (100) pour une éolienne (200) comprenant les étapes consistant à :
(S1) fournir au moins deux tôles d'acier (18) sur un site de fabrication ;
(S2) percer au moins deux paires de rangées parallèles de trous (12) le long de chacune d'au moins deux lignes de division verticales (10) de chacune desdites au moins deux tôles d'acier (18), dans lequel chaque paire des deux rangées parallèles de trous (12) est percée de sorte que chaque ligne de division verticale correspondante (10) se trouve agencée entre la paire correspondante des deux rangées parallèles de trous (12) ;
(S3) découper lesdites au moins deux tôles d'acier (18) le long des au moins deux lignes de division verticales respectives (10) pour former au moins deux segments verticaux (14) ; et
(S4) relier lesdits au moins deux segments verticaux (14) les uns aux autres pour reconstituer chacune desdites au moins deux lignes de division verticales (10) entre lesdits au moins deux segments verticaux (14) sur un site de construction au moyen d'une pluralité de moyens de liaison (20) afin de former la section de tour tubulaire segmentée (100).

2. Procédé selon la revendication 1,
dans lequel, après le découpage desdites au moins deux tôles d'acier (18), lesdits au moins deux segments verticaux (14) sont transportés du site de fabrication au site de construction.

3. Procédé selon l'une quelconque des revendications 1 et 2,
**caractérisé en ce que**,
lesdites au moins deux tôles d'acier (18) fournies présentent chacune une longueur de 10 m à 30 m, en particulier de 12 m à 20 m.

4. Procédé selon l'une quelconque des revendications précédentes,
**caractérisé en ce que** la section de tour tubulaire segmentée (100) fabriquée présente un diamètre de 4 m ou plus, en particulier un diamètre moyen de 4 m ou plus, en particulier un diamètre moyen de 5 m ou plus.

5. Procédé selon l'une quelconque des revendications précédentes,
**caractérisé en ce que**,
le procédé comprend en outre au moins l'une des étapes consistant à :
rouler lesdites au moins deux tôles d'acier, et souder lesdites au moins deux tôles d'acier roulées l'une à l'autre pour obtenir une section de tour tubulaire.

6. Procédé selon l'une quelconque des revendications précédentes,
**caractérisé en ce que**,
la section de tour tubulaire présente une hauteur comprise entre 3 m et 40 m, en particulier entre 20 m et 30 m.

7. Procédé selon l'une quelconque des revendications précédentes,
**caractérisé en ce que**,
l'étape consistant à relier lesdits au moins deux segments verticaux (14) au moyen d'une pluralité de moyens de liaison (20) comprend l'étape consistant à :
positionner au moins une plaque de liaison ou les plaques de liaison (22) à l'intérieur et/ou à l'extérieur desdites au moins deux tôles d'acier, pour recouvrir chacune des au moins deux lignes de division verticales reconstituées (10), dans lequel ladite au moins une plaque de liaison (22) comprend au moins une paire de trous, et dans lequel ladite au moins une plaque de liaison est positionnée de sorte que ladite au moins une paire de trous de ladite au moins une plaque de liaison soit alignée avec une paire de trous des au moins deux paires correspondantes de rangées parallèles de trous (12) desdites au moins deux tôles d'acier (18).

8. Procédé selon la revendication 7,
**caractérisé en ce que**,
ladite au moins une plaque de liaison (22) s'étend verticalement sur lesdites au moins deux tôles d'acier, en particulier sur chacune des tôles d'acier formant la section de tour tubulaire (100).

9. Procédé selon l'une quelconque des revendications précédentes,
**caractérisé en ce que**,
en outre au moins l'une des étapes consistant à :
percer au moins un trou oblong (32) le long de chacune des au moins deux lignes de division verticales (10) desdites au moins deux tôles d'acier (18) ; et
lors de la liaison desdits au moins deux segments verticaux (14) les uns aux autres sur le site de construction, positionner lesdits au moins deux segments verticaux (14) au moyen d'un moyen de positionnement (30) en combinaison avec ledit au moins un trou oblong (32).

10. Section de tour tubulaire segmentée (100) fabriquée selon un procédé selon l'une quelconque des revendications 1 à 9, comprenant :
au moins deux tôles d'acier (18) ; et
une pluralité de moyens de liaison (20) ;
dans laquelle chacune desdites au moins deux tôles d'acier (18) comprend trois à sept segments verticaux (14), en particulier trois à cinq segments verticaux (14), reliés les uns aux autres.

11. Section de tour tubulaire segmentée (100) selon la revendication 10,
**caractérisé en ce que**,
comprend en outre au moins une plaque de liaison (22), en particulier au moins une plaque de liaison (22) pour chacune des au moins deux lignes de division verticales (10) desdites au moins deux tôles d'acier (18).

12. Section de tour tubulaire segmentée (100) selon la revendication 11,
**caractérisé en ce que**,
au moins une plaque de liaison (22) est cintrée, plane ou usinée.

13. Section de tour tubulaire segmentée (100) selon l'une quelconque des revendications 10 à 12,
**caractérisé en ce que**,
chacun de la pluralité de moyens de liaison (20) comprend au moins deux éléments de fixation (24), et dans laquelle, pour chaque section desdites au moins une section de tour tubulaire segmentée (100), la pluralité de moyens de liaison comprend moins de deux mille éléments de fixation (24), en particulier moins de cinq cents éléments de fixation (24).

14. Section de tour tubulaire segmentée (100) selon la revendication 13,
**caractérisé en ce que**,
les deux éléments de fixation (24) comprennent chacun un boulon à tête hexagonale, un écrou à sertir, une douille soudée ou un trou taraudé.

15. Section de tour tubulaire segmentée (100) selon l'une quelconque des revendications 10 à 14,
**caractérisé en ce que**,
comprend en outre un moyen de positionnement (30), dans laquelle le moyen de positionnement (30) comprend une broche de positionnement, qui est configurée pour être insérée dans un trou oblong (32) d'un segment vertical (14) afin d'aligner lesdits au moins deux segments verticaux (14) l'un avec l'autre.

16. Éolienne, comprenant au moins une section de tour tubulaire segmentée (100) selon l'une quelconque des revendications 10 à 15 ou comprenant une section de tour tubulaire segmentée (100) fabriquée selon un procédé selon l'une quelconque des revendications 1 à 9.
